# EUROPEAN PATENT APPLICATION

(11) **EP 3 650 985 A1**
(43) Date of publication of application: **13.05.2020**
(21) Application number: 18204732.4
(22) Date of filing: 06.11.2018
(51) Int. Cl.: G06F 3/01

(54) **DETERMINING MATERIAL SHAPES**

(71) Applicant: Nokia Technologies Oy, 02610 Espoo (FI)
(72) Inventor: BRUNA, Matteo, Cambridge, CB3 0FA (GB)
(74) Representative: Bryers LLP

(57) **Abstract**

A method for determining a shape of a material comprises an electrically conducting portion, the method comprising applying a current to the conducting portion, measuring impedance of the conducting portion, comparing the measured impedance against a set of impedance values mapping multiple topological configurations of the material to respective impedance values, and determining the shape of the material.

## Description

### TECHNICAL FIELD

Aspects relate to determining a shape of a material comprising an electrically conducting portion.

### BACKGROUND

Information relating to people's movements, activities, and posture can be gathered using wearable devices. For example, wrist band activity trackers can be used to gather limited data from indirect user measurements. In order to obtain more precise data, several prototypes have been suggested that use multiple strain sensors placed at strategic places on a body part to be monitored.

### SUMMARY

According to an example, there is provided a method for determining a shape of a material comprising an electrically conducting portion, the method comprising applying a current to the conducting portion, measuring impedance of the conducting portion, comparing the measured impedance against a set of impedance values mapping multiple topological configurations of the material to respective impedance values, and determining the shape of the material. The method can further comprise generating the set of impedance values mapping multiple topological configurations of the material to respective impedance values by arranging the material into a preselected configuration, applying a current to the conducting portion, and determining a measure of impedance of the conducting portion of the material in the preselected configuration. Determining the shape of the material can comprise determining a match between the measure of impedance of the conducting portion and one of values from the set of impedance values. Determining the match can include calculating a measure of distance between the measure of impedance of the conducting portion and one of values from the set of impedance values, and using the measure of distance, determining the shape of the material. The method can further comprise mapping the determined shape of the material to a command for execution on apparatus configured to be controlled, at least in part, by a user interacting with the material.

According to an example, there is provided apparatus, comprising, material comprising an electrically conductive portion, electrodes attached to the electrically conductive portion and configured to apply a current to the conductive portion, and control means to determine a measure of impedance of the conductive portion. The conductive portion can comprise a conductive ink. The conductive portion can comprise a silver or graphene-based ink. The material can further comprise a non-electrically-conductive portion.

According to an example, there is provided a non-transitory machine-readable storage medium encoded with instructions executable by a processor for determining a shape of a material comprising an electrically conducting portion, the machine-readable storage medium comprising instructions to determine a measure of impedance of the conductive portion following application of an electrical current thereto, map the measured impedance to one of multiple predetermined impedance values representing respective topological configurations of the material, and select a candidate shape of the material based on the selected topological configuration. The storage medium can be further encoded with instructions to apply the electrical current to the conductive portion. The storage medium can be further encoded with instructions to determine, based on the candidate shape of the material, a command for execution on apparatus configured to be controlled, at least in part, by a user interacting with the material. The storage medium can be further encoded with instructions to execute the command. The storage medium can be further encoded with instructions to generate a set of training data comprising the multiple predetermined impedance values representing respective topological configurations of the material.

### BRIEF DESCRIPTION OF THE DRAWINGS

Embodiments will now be described, by way of example only, with reference to the accompanying drawings, in which:
Figure 1 is a schematic representation of the principle of electrical impedance tomography;
Figure 2 is a schematic representation of a portion of material according to an example;
Figure 3 is schematic representation showing a change of conductive pathways according to an example;
Figure 4 is a flowchart of a method according to an example; and
Figure 5 shows an example of a processor associated with a memory according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, there is provided a material, which is at least partially electrically conductive. That is, the material comprises an electrically conducting portion. The material can be monitored by means of electrical current paths flowing into it. In an example, the impedance of the conducting portion can be measured. The measured impedance can be compared against a set of impedance values mapping multiple topological configurations of the material to respective impedance values in order to enable the shape of the material to be determined.

In an example, an apparatus can comprise the material and an electrical control board configured to provide an excitation current and take electrical potential measurements. In an example, the electrical measurements are carried out in a non-local fashion, taking advantage of current propagation that happens in a topologically connected homogeneous or inhomogeneous conductor. Thus, by monitoring the shape of the material it is possible to make direct measurements of at least one of movements, gestures and activities. For example, if the material forms part of a garment, direct measurements of movements, gestures and activities of the user wearing the garment can be determined. In another example, the material may form part of an apparatus that a user interacts with. For example, the material may for part of a chair, and direct measurements of movements, posture, gestures and activities and so on of the user can be determined by determining changes in the shape of the material. In an example, the shape of the material can be used to determine or select a command to be executed. For example, a particular predetermined material shape can be mapped to and/or trigger/select a command, so that a user placing the material into that shape, actively or passively (i.e. by design or inadvertently), can trigger or select a command that can cause a response in another system for example. A response can vary - for example, it could be that the command is used to execute a function on a computing apparatus, or cause some environmental change such as triggering a change in a temperature of a room or turning on/off lighting and so on. Generally, the shape of the material can be used to execute or select a command that triggers, activates or changes any number of things. That is, the previous examples are not intended to be limiting.

In a homogeneous electrical conductor, an electrical potential applied between two points on its surface produces a motion of charges that go from one contact to another following the path of least impedance. Electrostatic effects on the other hand, make the current spread asymptotically throughout most of the conductor. This effect is exploited in techniques such as electrical impedance tomography and sheet resistance measurements using the Van der Pauw method.

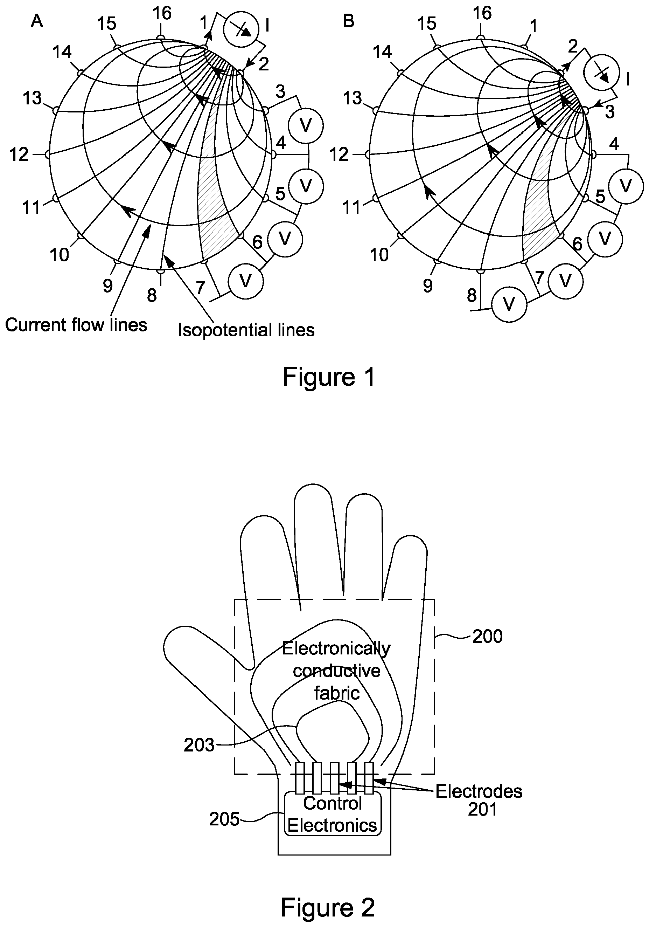

Figure 1 is a schematic representation of the principle of electrical impedance tomography. An electric current may be fed consecutively through different available electrode pairs and the corresponding voltage measured consecutively by all remaining electrode pairs. Thus, it is possible to create an image of the impedance of different regions of the volume conductor over which the electrodes are placed. Figure 1 is a schematic representation of an example of a cylindrical volume conductor with 16 equally spaced electrodes. In the example of figure 1, a current is applied through electrodes 1 and 2 (A). The voltage can be measured successively with electrode pairs 3-4, 4-5, ... ,15-16. From these 13 voltage measurements the first four measurements are illustrated in A of figure 1. All 13 measurements are independent, and each represents the impedance between the equipotential lines intersecting the measurement electrodes. This is indicated with shading for the voltage measurement between electrodes 6 and 7 for example. The next set of 13 voltage measurements are obtained by feeding the current through electrodes 2 and 3, as shown in B of figure 1.

Such a technique is capable of measuring inhomogeneities in the electrical conductivity of the material over which the electrodes are placed. However, according to an example, the same type of measurements can be used to detect changes in the shape of the conductor itself, and thus changes in the shape of a material to which the conductor is applied.

In an example, a portion of a material is made electrically conductive by dying it or printing it with an electrically conductive fluid or ink. For example, the material can have silver or graphene-based inks deposited thereon in order to create conductive regions. In an example, the entire portion can have an electrically conductive print fluid or ink deposited over it, and some areas can be removed to form non-conductive portions. A similar effect can be obtained using a mask over the portion for example.

As textiles, which may form the basis of the material, do not typically withstand high temperatures, printed patterns using silver material can be sintered at elevated temperatures to provide high conductivity. Nevertheless, silver particles dispersed in a carrier medium for use in an inkjet printing system for example may block the nozzles of the inkjet print head. It is therefore possible to use a reactive silver ink which contains silver in a complexed form, such that, after printing, the complexed silver can be transferred into metallic form by evaporating the complexing ligands. An example of a suitable silver-based reactive ink for inkjet-printing of conductive portions on a material is described in, for example, Microelectronic Engineering, Volume 176, 25 May 2017, Pages 84-88.

A graphene-based ink can be provided by using graphene oxide (GO) dispersed onto the material by vacuum filtration for example. GO is a chemically modified graphene containing oxygen functional groups such as epoxides, alcohols, and carboxylic acids, and has a carbon to oxygen ratio of approximately three to one. An example of a suitable material for use is described in, for example, Carbon, Volume 111, January 2017, Pages 622-630.

The impedance in different parts of the portion of the material will be linked to its shape. Thus, by measuring the impedance of a conductive region, an indication of its shape can be determined. In an example, multiple such conductive portions may be provided in various location over a material or garment.

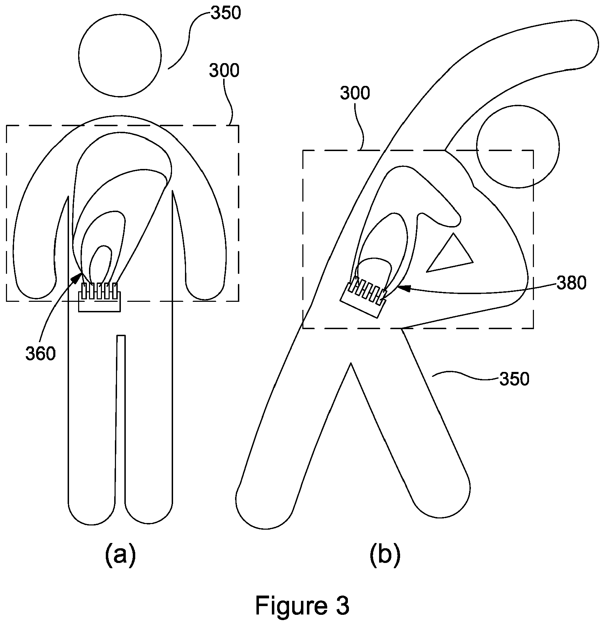

Figure 2 is a schematic representation of a portion of material according to an example. In the example of figure 2, the portion of material is part of a glove. The portion, shown generally at 200 in figure 3, is electrically conducting. For example, as mentioned above, this portion 200 of the glove may have been printed with a silver or graphene-based ink.

Multiple electrodes 201 are provided to enable application of current to the conducting portion 200. Control means, such as control electronics 205, connected to the electrodes 201, are used to measure the measure impedance of the conducting portion in the same manner as that described above with reference to figure 1. For example, current can be applied to the conducting portion 200 using two of the electrodes 201, with impedance measurements being taken by the control electronics 205 via the other electrodes not used to apply current to the conducting portion 200. Lines of current flow are depicted schematically by lines 203.

As the conducting portion 200 moves and changes shape, the impedance measured by the control electronics 205 varies as the pathways of least impedance over the surface of the glove change. By comparing a measured impedance against a set of impedance values mapping multiple topological configurations of the portion 200 to respective impedance values, the shape of the portion can be determined, thereby providing an indication of the shape or configuration of the glove in the example of figure 2.

Figure 3 is schematic representation showing a change of conductive pathways according to an example. In the example of figure 3, a person 350 is shown wearing a garment that has a conductive portion, depicted at 300. In figure 3a the current flow lines 360 are depicted when the user and hence the garment/conductive portion is in a first configuration. In figure 3b the current flow lines 380 are depicted when the user and hence the garment/conductive portion is in a second configuration that is different from the first.

As can be seen, the current distribution in the conduction region 300 changes as the user moves. Thus, the measured impedance will vary depending on the configuration of the conductive portion, which varies due to user movements. As noted above, a number of preselected configurations and their respective measured impedance values can therefore be used as training data to subsequently map a measured impedance to a position of the user, and hence the garment/conductive portion.

According to an example, the set of impedance values mapping multiple topological configurations of the material to respective impedance values can be generated by arranging the material into a preselected configuration and applying a current to the conducting portion. Measuring the impedance of the portion in this configuration therefore yields a measure of impedance of the conducting portion in the preselected configuration, enabling this impedance value to be used as a future indicator of portion shape. For example, if, in use, a configuration of the portion yields an impedance measurement that is the same or similar to the value generated above, it will be apparent that the portion is in the same, or a similar, configuration.

Thus, in an example, impedance values at multiple preselected configurations of the portion can be obtained. These values can be used as a training set to train a neural network that can be used to analyse and interpret data obtained from subsequent impedance measurements. For example, a machine learning algorithm can take the data (the impedance values at multiple preselected configurations of the portion), defined as the ground truth, and automatically adjust a series of parameters (weights) to perform the recognition of such data.

With reference to figure 2 for example, the system could use, for example, 50 samples (but the more the better) from certain shapes of the glove corresponding to gestures (for example: fist, open, OK, number 2 etc...) during a training phase where the user would be asked to perform such gestures to allow the system to collect data. Then, using this training set, the system will be able to automatically recognize such gestures should the user make them in future.

In order to improve effectiveness, which is linked to the spread of current in a conductive portion, areas of non-conduction can be provided. For example, during the dying or printing process, in which the conductive material is applied to the portion in question, certain region can be masked.

According to an example, once a shape of material has been determined, it can be used to execute a command. For example, the determined shape of the material can be mapped to a command for execution on apparatus configured to be controlled, at least in part, by a user interacting with the material.

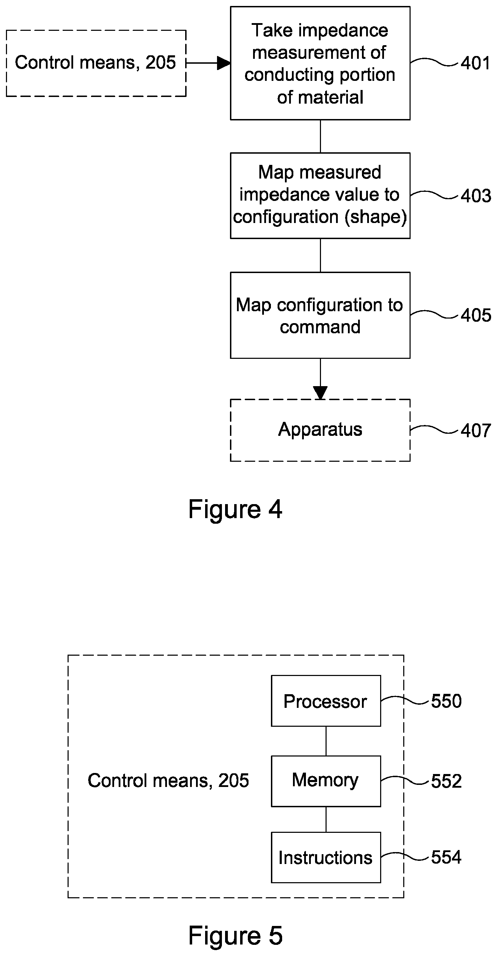

Figure 4 is a flowchart of a method according to an example. In block 401 an impedance measurement of a conducting portion of a material is taken. In block 403, the measured impedance value is mapped to a configuration (shape) of the portion of the material. The configuration can then be mapped to an associated command (block 405). The command can be used to execute a function on an apparatus 407.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus (for example, control means 205) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

Figure 5 shows an example of a processor 550 associated with a memory 552 according to an example, which form part of a control means 205. The memory 552 comprises computer readable instructions 554 which are executable by the processor 550. The instructions 554 can comprise instructions to determine a measure of impedance of the conductive portion following application of an electrical current thereto, map the measured impedance to one of multiple predetermined impedance values representing respective topological configurations of the material, and select a candidate shape of the material based on the selected topological configuration.

Further instructions can be provided to apply the electrical current to the conductive portion; determine, based on the candidate shape of the material, a command for execution on apparatus configured to be controlled, at least in part, by a user interacting with the material; execute the command, such as at an external apparatus 407 for example; and generate a set of training data comprising the multiple predetermined impedance values representing respective topological configurations of the material.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.
While the method, apparatus and related aspects have been described with reference to certain examples, various modifications, changes, omissions, and substitutions can be made without departing from the spirit of the present disclosure. In particular, a feature or block from one example may be combined with or substituted by a feature/block of another example.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

The project leading to this application has received funding from the European Union's Horizon 2020 research and innovation programme under grant agreement No 785219 - GrapheneCore2.

## Claims

1. A method for determining a shape of a material comprising an electrically conducting portion, the method comprising:
applying a current to the conducting portion;
measuring impedance of the conducting portion;
comparing the measured impedance against a set of impedance values, each of which map to a topological configuration of the material; and
selecting a topical configuration of the material based on the measured impedance value of the conducting portion.

2. A method as claimed in claim 1, further comprising:
generating each of impedance values in the set of impedance values by:
arranging the material into a preselected configuration;
applying a current to the conducting portion; and
determining a measure of impedance of the conducting portion of the material in the preselected configuration.

3. A method as claimed in claim 1 or 2, wherein determining the shape of the material further comprises:
determining a match between the measure of impedance of the conducting portion and one of the impedance values from the set of impedance values.

4. A method as claimed in claim 3, wherein determining the match comprises:
calculating a measure of distance between the measure of impedance of the conducting portion and one of values from the set of impedance values; and
using the measure of distance, determining the shape of the material.

5. A method as claimed in any preceding claim, further comprising:
mapping the determined shape of the material to a command for execution on apparatus configured to be controlled, at least in part, by a user interacting with the material.

6. Apparatus, comprising:
material comprising an electrically conductive portion;
electrodes attached to the electrically conductive portion and configured to apply a current to the conductive portion; and
control means to determine a measure of impedance of the conductive portion.

7. Apparatus as claimed in claim 6, wherein the conductive portion comprises a conductive ink.

8. Apparatus as claimed in claim 6 or 7, wherein the conductive portion comprises a graphene-based ink.

9. Apparatus as claimed in any of claims 6 to 8, wherein the material further comprises a non-electrically-conductive portion.

10. A non-transitory machine-readable storage medium encoded with instructions executable by a processor for determining a shape of a material comprising an electrically conducting portion, the machine-readable storage medium comprising instructions to:
determine a measure of impedance of the conductive portion following application of an electrical current thereto;
map the measured impedance to one of multiple predetermined impedance values representing respective topological configurations of the material; and
select a candidate shape of the material based on a selected topological configuration.

11. A non-transitory machine-readable storage medium as claimed in claim 10, further comprising instructions to:
apply the electrical current to the conductive portion.

12. A non-transitory machine-readable storage medium as claimed in claim 10 or 11, further comprising instructions to:
determine, based on the candidate shape of the material, a command for execution on apparatus configured to be controlled, at least in part, by a user interacting with the material.

13. A non-transitory machine-readable storage medium as claimed in claim 12, further comprising instructions to execute the command.

14. A non-transitory machine-readable storage medium as claimed in any of claims 10 to 13, further comprising instructions to:
generate a set of training data comprising the multiple predetermined impedance values representing respective topological configurations of the material.

15. A non-transitory machine-readable storage medium as claimed in claim 13, further comprising instructions to:
apply a current to the conducting portion in each of multiple preselected configurations; and
for each of the preselected configurations, determine a measure of impedance of the conducting portion of the material.
